# EUROPÄISCHE PATENTANMELDUNG

(11) **EP 3 321 114 A1**
(43) Veröffentlichungstag der Anmeldung: **16.05.2018**
(21) Anmeldenummer: 17200070.5
(22) Anmeldetag: 06.11.2017
(51) Int. Cl.: B60H 1/34, F24F 13/065

(54) **LUFTAUSSTRÖMER**

(30) Priorität: 14.11.2016 DE 102016121797
(71) Anmelder: Dr. Schneider Kunststoffwerke GmbH, 96317 Kronach-Neuses (DE)
(72) Erfinder: Uhlenbusch, Olaf, 96275 Marktzeuln (DE)

(57) **Zusammenfassung**

Es wird ein Luftausströmer (10) beschrieben, der einen Luftkanal (16) aufweist, in dem ein Luftleitkörper (50) verschwenkbar gelagert ist. Der Luftleitkörper (50) weist einen rückseitigen Abschnitt auf, der einer Luftaustrittsöffnung (20) des Luftkanals (16) abgewandt ist. Der Luftleitkörper (50) ist über den rückseitigen Abschnitt verschwenkbar im Luftkanal (16) gelagert ist, wobei der Luftleitkörper (50) einen kreisförmigen Querschnitt aufweist und der Luftkanal (16) einen dem Luftleitkörper (50) angepassten Querschnitt aufweist. Durch den kreisförmigen Querschnitt weist der Luftleitkörper (50) eine geringe Erstreckung im Luftkanal (16) auf. Zudem ermöglicht der Luftleitkörper (50) zusammen mit dem korrespondierend ausgebildeten Luftkanal (16) eine Luftablenkung über einen weiten Bereich.

## Beschreibung

Es wird ein Luftausströmer beschrieben, der einen Luftkanal aufweist, in dem ein Luftleitkörper verschwenkbar gelagert ist.

Luftausströmer dienen zur Ablenkung von ausgegebener Luft, die von einer Klimaanlage oder einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Bei Luftausströmern kann in der Regel neben der Steuerung der Ablenkung von ausgegebener Luft, bspw. von einer Klimaanlage, auch die Menge an ausgegebener Luft geregelt werden. Die Menge der zugeführten Luft wird über eine Steuereinrichtung geregelt, die bspw. mit einer Bedieneinrichtung zum Verschwenken des Luftleitkörpers oder getrennt von einer solchen Bedieneinrichtung neben einer Ausströmöffnung angeordnet ist. Luftausströmer können in einem Fahrzeugarmaturenbrett oder im Bereich der A-, B- oder C- Säule oder am Dach eines Kraftfahrzeuges angeordnet sein.

### Stand der Technik

Konventionelle Luftausströmer weisen in der Regel Lamellen auf, die zur Luftablenkung dienen. Über die Lamellen kann die ausgegebene Luft abgelenkt werden. Das Ausmaß einer Luftablenkung hängt von einer Vielzahl von Faktoren ab. Diese sind bspw. die Abmaße der Lamellen, die Anzahl der Lamellen, der Grad um welchen die Lamellen verschwenkt werden können etc.

Luftausströmer sollen zudem ein optisch ansprechendes Erscheinungsbild aufweisen. Hierzu sind Luftausströmer bekannt, die im Vergleich zu ihrer Länge eine geringe Höhe aufweisen. Eine Luftablenkung nach oben und unten ist daher begrenzt.

Um eine definierte Luftablenkung zu erreichen, weisen die aus dem Stand der Technik bekannten Luftausströmer eine solche Höhe auf, dass eine bestimmte Anzahl an Lamellen angeordnet werden kann. Die Anzahl der Lamellen legt somit auch die maximale Luftablenkung fest. In letzter Zeit werden jedoch vermehrt Luftausströmer mit einer relativ geringen Höhe bei einer demgegenüber größeren Breite in Kraftfahrzeugen eingesetzt. Die Luftablenkung über sogenannte Vertikallamellen wird dabei nicht beeinträchtigt, da aufgrund der großen Breite Platz für eine Vielzahl von Lamellen ist. Es bestehen aber Probleme bei der Luftablenkung, welche über die Lamellen bewerkstelligt wird, die sich über die Breite des Luftausströmers erstrecken. Bei solchen Luftausströmern können häufig nur wenige breite Lamellen, in der Regel maximal drei Lamellen, angeordnet werden. Die maximale Luftablenkung ist dadurch begrenzt.

Luftausströmer mit einer noch geringeren Höhe können baulich bedingt nur eine sich über die Breite des Luftausströmers erstreckende Lamelle aufweisen. Es kommt dann aber zu einer unzureichenden Luftablenkung nach oben und nach unten.

Im Stand der Technik wurde bereits vorgeschlagen, anstelle von Lamellen kegelförmige Luftleitelemente vorzusehen.

So offenbart DE 10 2013 210 055 B3 einen Luftausströmer mit einem Ei-förmigen Luftleitelement, welches starr innerhalb eines Luftkanals angeordnet ist. Zur Luftablenkung ist an dem Luftleitelement an dessen Rückseite ein Flügel verschwenkbar angeordnet. Der Flügel kann über ein an der Vorderseite des Luftleitelements abstehendes Bedienelement verschwenkt werden. Der Luftausströmer weist einen relativ tiefen Luftkanal und ein relativ langes Luftleitelement auf. Die lange Erstreckung ist erforderlich, damit die Luft entlang der Oberfläche des Luftleitelements und der gegenüberliegenden Kanalwände des Luftkanals entlang strömen und anschließend der Krümmung folgend abgelenkt werden kann. Zudem weist der Luftausströmer einen komplexen Aufbau mit einer Vielzahl von Komponenten auf, die zur Luftzuführung über den Flügel erforderlich sind, da die Steuerung innerhalb des Ei-förmigen Luftleitelements erfolgt.

FR 2 872 260 A1 offenbart einen Luftausströmer mit einem langgestreckten Luftleitelement, welches über einen Ring verschwenkbar in einem langgestreckten Luftkanal angeordnet ist. Die langgestreckte Form ist wie bei dem Luftausströmer aus DE 10 2013 210 055 B3 erforderlich, damit die Luft der Krümmung folgend abgelenkt wird. Stege, die das Luftleitelement mit dem Ring verbinden, werden beim Verbringen des Luftleitelements in verschiedene Stellungen mit verdreht, so dass über die Stege eine zusätzlich Luftablenkung erreicht wird. Dies ist jedoch als nachteilig anzusehen.

Wie der Luftausströmer aus DE 10 2013 210 055 B3 benötigt der Luftausströmer von FR 2 872 260 A1 einen großen Bauraum.

Zudem wird oft gefordert, bewegliche Komponenten des Luftausströmers von außen nicht zugänglich bzw. nicht sichtbar anzuordnen. Dies dient sowohl dem Schutz der Komponenten des Luftausströmers als auch optischen Gesichtspunkten.

### Aufgabe

Es ist daher Aufgabe einen Luftausströmer anzugeben, der eine Luftablenkung in einem weiten Bereich bereitstellt sowie optischen und sicherheitsrelevanten Aspekten Rechnung trägt. Zudem soll eine alternative Lösung zu den aus dem Stand der Technik bekannten Luftausströmern angegeben werden, die einfach aufgebaut ist.

### Lösung

Die Aufgabe wird durch einen Luftausströmer mit den in Anspruch 1 angegeben technischen Merkmalen gelöst. Vorteilhafte Weiterbildungen sind in den Unteransprüchen im Detail angegeben.

Ein die vorstehend genannte Aufgabe lösender Luftausströmer weist einen Luftkanal auf, in dem ein Luftleitkörper verschwenkbar gelagert ist, wobei
- der Luftleitkörper einen rückseitigen Abschnitt aufweist, der einer Luftaustrittsöffnung des Luftkanals abgewandt ist,
- der Luftleitkörper über den rückseitigen Abschnitt verschwenkbar im Luftkanal gelagert ist,
- der Luftleitkörper einen kreisförmigen Querschnitt aufweist, und
- der Luftkanal einen dem Luftleitkörper angepassten Querschnitt aufweist.

Aufgrund des kreisförmigen Querschnitts benötigt der Luftausströmer gegenüber bekannten Ausführungen deutlich weniger Bauraum. Insbesondere kann der Luftkanal des Luftausströmers deutlich kürzer gehalten werden, da das Luftleitelement gegenüber bekannten Luftleitelementen eine geringere Erstreckung entlang des Luftkanals aufweist.

Darüber hinaus wird über den kreisförmigen Querschnitt des Luftleitkörpers eine Luftablenkoberfläche mit einer deutlich größeren Krümmung gegenüber keulen- oder Ei-förmigen Luftleitelementen aus dem Stand der Technik bereitgestellt. Aufgrund des kreisförmigen Querschnitts wird daher auch eine stärkere Luftablenkung gegenüber bekannten Luftausströmern mit Luftleitelementen erreicht.

Zudem weist der Luftausströmer keine komplexen Anordnungen auf, so wie sie beispielsweise für den Luftausströmer von DE 10 2013 210 055 B3 erforderlich sind. Eine Luftablenkung kann lediglich über den Luftleitkörper erreicht werden.

Insgesamt ermöglicht der hierin beschriebene Luftausströmer eine deutlich größere Luftablenkung bei einem erheblich reduzierten Bauraum.

Der Luftleitkörper kann weiterhin nicht um eine durch den Bereich mit dem kreisförmigen Querschnitt verlaufende Achse verschwenkt werden, sondern um eine Schwenkachse oder einen Schwenkpunkt, die bzw. der außerhalb des eigentlichen Luftleitkörpers liegt. In weiteren Ausführungen kann der Luftleitkörper versetzt zu einer durch den Mittelpunkt des kreisförmigen Querschnitts verlaufenden Mittelachse verschwenkt werden. Hierüber wird eine "Taumel"-Bewegung des Luftleitkörpers erreicht. Dies ermöglicht eine nicht linear zunehmende Luftablenkung in den verschwenkten Stellungen des Luftleitkörpers, wodurch die Luftablenkung weiter verbessert wird, weil die Strömungsquerschnitte durch die Verlagerung des Luftleitkörpers nicht linear zunehmend bzw. abnehmend verkleinert bzw. vergrößert werden.

Zur Luftablenkung wird der Luftleitköper verschwenkt, wobei die Spalte zwischen dem Luftleitkörper und der Kanalwand des Luftkanals verändert werden. Entsprechend wird hierüber geregelt wie viel Luft und mit welcher Geschwindigkeit aufgrund der Strömungsquerschnittänderung die Luft ausströmt. In Kombination mit der Luftablenkung durch die Krümmung der Wände des Luftkanals und der Oberfläche des Luftleitkörpers wird eine Luftablenkung erreicht.

Der Luftkanal weist in dem Bereich, in welchem der kreisförmige Luftleitkörper gelagert ist, eine korrespondierende Ausgestaltung auf, wobei zur Änderung der ausgegebenen Luft, der Luftleitkörper verlagert wird und mindestens an einer Seite ein Spalt zwischen dem Körper und dem Luftkanal ausbildet wird.

Aufgrund der runden Ausgestaltung der Luftleitkörper und des Luftkanals in den verschiedenen Ausführungsformen erfolgt auch eine Luftablenkung unter Ausnutzung des Coanda-Effekts.

Das optische Erscheinungsbild des Luftausströmers ist verbessert, da keine beweglichen Lamellen in sämtlichen Stellungen des Luftleitelements sichtbar sind. Zudem wird eine Beschädigung des Luftausströmers verhindert, da das Einbringen von Gegenständen in den Luftkanal durch den Luftleitkörper erschwert oder verhindert wird. Auch die statischen Eigenschaften (z.B. Durchbiegung) werden aufgrund der Form des Luftleitelementes gegenüber einer oder einer Vielzahl von dünnen "biegeweichen" Lamellen verbessert.

Darüber hinaus wird auch eine Verletzung von Personen verhindert, da in die verhältnismäßig kleinen Spalte zwischen einem die Luftaustrittsöffnung umgebenen Rand und dem Luftleitköper keine Körperteile (z.B. Finger) eingebracht werden können.

Mittels einer feinen horizontalen Linie (z.B. tamponiert oder heißgeprägt) oder eines andersartigen Indikators, die oder der in der Mitte des Luftleitkörpers aufgebracht ist, lässt sich anzeigen, ob der Luftleitkörper nach oben (Luftrichtung nach oben) oder nach unten (Luftrichtung nach unten) verschwenkt ist.

In einen als Hohlkörper ausgebildeten Luftleitkörper lässt sich darüber hinaus eine Beleuchtung einbringen, die als ambiente Beleuchtung oder als Richtungsanzeige genutzt werden kann.

Der Luftleitkörper kann kugelförmig ausgebildet sein. In solchen Ausführungen kann der rückseitige Abschnitt durch einen zweiten kugelförmigen Abschnitt gebildet werden, der an dem kugelförmigen Luftleitkörper angeformt ist und einen deutlich kleineren Durchmesser als der Luftleitkörper aufweist. Der zweite kugelförmige Abschnitt ist in einem Lager mit einer Aufnahme im Luftkanal aufgenommen und kann über einen Ring in der Aufnahme gehalten sein. In solchen Ausführungen weist der Luftausströmer eine im Wesentlichen runde Luftaustrittsöffnung auf. Der Luftleitköper kann in sämtliche Richtungen verschwenkt werden, so dass weitere Luftablenkeinrichtungen nicht erforderlich sind. Das Lager mit der Aufnahme kann bspw. über einen Steg an mindestens einer Kanalwand des Luftkanals mit dem Gehäuse des Luftausströmers verbunden sein. Gegenüber FR 2 872 260 A1 weist der Luftausströmer den Vorteil auf, dass die Lagerstelle für den Luftleitkörper starr ausgebildet ist und es gegenüber FR 2 872 260 A1 nicht zu Verwirbelungen durch mitdrehende und verschwenkbare Stege kommt. Zudem weist der Luftausströmer eine deutlich geringere Größe auf und bietet eine größere Luftablenkung.

In weiteren Ausführungsformen kann der Luftleitkörper walzenförmig ausgebildet sein. Der walzenförmige Luftleitkörper kann in dem Luftkanal bogenförmig verschwenkt werden. Ein walzenförmiger Luftleitkörper eignet sich insbesondere bei sogenannten Fugenausströmern, die im Vergleich zu ihrer Breite eine geringe Höhe oder umgekehrt aufweisen. Fugenausströmer weisen dabei in der Regel nur eine relativ schmale Luftaustrittsöffnung auf. In weiteren Ausführungen kann die Luftaustrittsöffnung als Schlitz ausgebildet sein. Der walzenförmige Luftleitkörper kann an seinen beiden Endabschnitten abstehende Elemente aufweisen, die als rückseitiger Abschnitt ein Verschwenken des Luftleitkörpers ermöglichen.

Der walzenförmige Luftleitkörper wird zur Luftablenkung lediglich bogenförmig verschwenkt, wodurch eine Änderung der Strömungsquerschnitte unterhalb und oberhalb bzw. neben dem Luftleitkörper erfolgt. In Blick auf den Luftausströmer ist für einen Benutzer daher nur eine Veränderung der Abstände des Luftleitkörpers zu einem umlaufenden Rand im Bereich der Luftaustrittsöffnung oder einer Blende sichtbar.

In weiteren Ausführungsformen mit einem walzenförmigen Luftausströmer kann im Luftkanal eine Lamellenanordnung angeordnet sein. Über die Lamellenanordnung kann bei einem walzenförmigen Luftleitkörper eine weitere Änderung der Richtung von ausgegebener Luft erfolgen.

Die Lamellenanordnung kann in weiteren Ausführungsformen aus mindestens einem Lamellenpaar bestehen, wobei eine erste Lamelle in einem oberen Luftweg und eine zweite Lamelle des Lamellenpaares in einem unteren Luftweg angeordnet sind. Bspw. sind die Lamellen über einen Lagerzapfen im Luftkanal und über einen zweiten Lagerzapfen an einem Haltesteg drehbar gelagert, der im Wesentlichen parallel zu dem walzenförmigen Luftleitelement verläuft. Durch die Ausgestaltung des Luftausströmers mit einem walzenförmigen Luftleitkörper mit kreisförmigen Querschnitt sowie dem daran angepassten Luftkanal sind die Lamellen der Lamellenanordnung über die Luftaustrittsöffnung nicht sichtbar.

In weiteren Ausführungsformen kann der Luftausströmer einen Haltesteg mit Lagerstellen für Paare gegenüberliegender Lamellen aufweisen, wobei der Haltesteg parallel zu dem walzenförmigen Luftleitkörper verläuft und dem Luftleitkörper in Luftströmungsrichtung vorgelagert ist.

Der Haltesteg kann in weiteren Ausführungsformen einen keilförmigen Abschnitt aufweisen. Der keilförmige Abschnitt unterstützt die Luftverteilung zu dem oberen Bereich und dem unteren Bereich.

Der Luftleitkörper kann in weiteren Ausführungsformen an seiner der Luftaustrittsöffnung zugewandten Seite ein Bedienelement oder eine Vertiefung aufweisen. Über das Bedienelement oder die Vertiefung kann der Luftleitkörper einfach per Hand verstellt werden, um die Richtung der ausströmenden Luft zu verändern.

In weiteren Ausführungsformen kann der Luftleitkörper mit einer Einrichtung zum Verschwenken des Luftleitkörpers gekoppelt sein. Hierüber kann ein Verschwenken eines Luftleitkörpers über ein Bedienelement oder über ein mit der Funktion des Verschwenkens gekoppeltes Bedienfeld erfolgen. Zusätzlich kann über ein Bedienelement oder ein Bedienfeld auch ein Verschwenken der Lamellen einer Lamellenanordnung erfolgen.

Weiterhin kann der Luftausströmer zusätzlich eine Steuer- oder Schließeinrichtung aufweisen, die zur Steuerung der Menge an zugeführter Luft vorgesehen ist. Eine solche Steuer- oder Schließeinrichtung kann Klappen oder Flügel aufweisen, die verdreh- und/oder verschwenkbar sind. Die Steuer- oder Schließeinrichtung kann über ein Bedienelement oder ein Bedienfeld angesteuert werden, um manuell oder motorisch die Menge an zugeführter Luft zu dem Luftausströmer zu regeln.

In noch weiteren Ausführungsformen kann der Luftleitkörper hohl ausgebildet sein. Eine hohle Ausgestaltung bietet den Vorteil der Gewichtsreduzierung. Zudem können in einem hohlen Luftleitkörper Beleuchtungselemente aufgenommen sein. In weiteren Ausführungsformen kann der Luftleitkörper mindestens abschnittsweise aus einem transparenten Material bestehen oder transparente Bereiche aufweisen, so dass eine Beleuchtung des Luftausströmers erfolgen kann. Die Beleuchtung kann in Abhängigkeit der Luftmenge, Temperatur und Lichtverhältnissen erfolgen. Zum Beispiel können Leuchtdioden in dem Luftleitkörper aufgenommen oder Licht von Leuchtdioden über Lichtleiter in den Luftleitkörper eingebracht werden. Bspw. kann die Lichtübertragung bei einem kugelförmigen Luftleitkörper über die Aufnahme und bei einem walzenförmigen Luftleitkörper über die seitlichen Elemente im hinteren Abschnitt erfolgen.

Damit der Luftleitkörper seine Ausrichtung in den verschiedenen Stellungen beibehält kann der Luftleitkörper über Dämpfungs- oder Reibelemente gelagert sein.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Figuren

In den Zeichnungen zeigt:
- Fig. 1: eine perspektivische Darstellung eines Luftausströmers einer ersten Ausführungsform in einer geschnittenen Ansicht;
- Fig. 2: eine perspektivische Darstellung des Luftausströmers der ersten Ausführungsform;
- Fig. 3: eine Frontansicht des Luftausströmers der ersten Ausführungsform;
- Fig. 4: eine perspektivische Darstellung eines Haltestegs mit Teilen einer Lamellenanordnung des Luftausströmers der ersten Ausführungsform;
- Fig. 5: eine perspektivische Darstellung eines Luftleitkörpers des Luftausströmers der ersten Ausführungsform;
- Fig. 6: eine schematische Schnittansicht des Luftausströmers der ersten Ausführungsform in einer Neutralstellung;
- Fig. 7: eine schematische Schnittansicht des Luftausströmers der ersten Ausführungsform mit einem nach oben verschwenkten Luftleitkörper;
- Fig. 8: eine perspektivische Darstellung eines Luftausströmers einer zweiten Ausführungsform;

- Fig. 9a, b: verschiedene Ansichten des Luftausströmers der zweiten Ausführungsform in einer Neutralstellung; und
- Fig. 10a, b: verschiedene Ansichten des Luftausströmers der zweiten Ausführungsform mit einem nach unten verschwenkten Luftleitkörper.

In den Zeichnungen mit gleichen Bezugszeichen versehene Teile entsprechen im Wesentlichen einander, sofern nichts anderes angegeben ist. Darüber hinaus wird darauf verzichtet, Bestandteile zu beschreiben und zu zeigen, welche nicht wesentlich zum Verständnis der hierin offenbarten technischen Lehre sind.

### Ausführliche Beschreibung von Ausführungsbeispielen

### Erste Ausführungsform

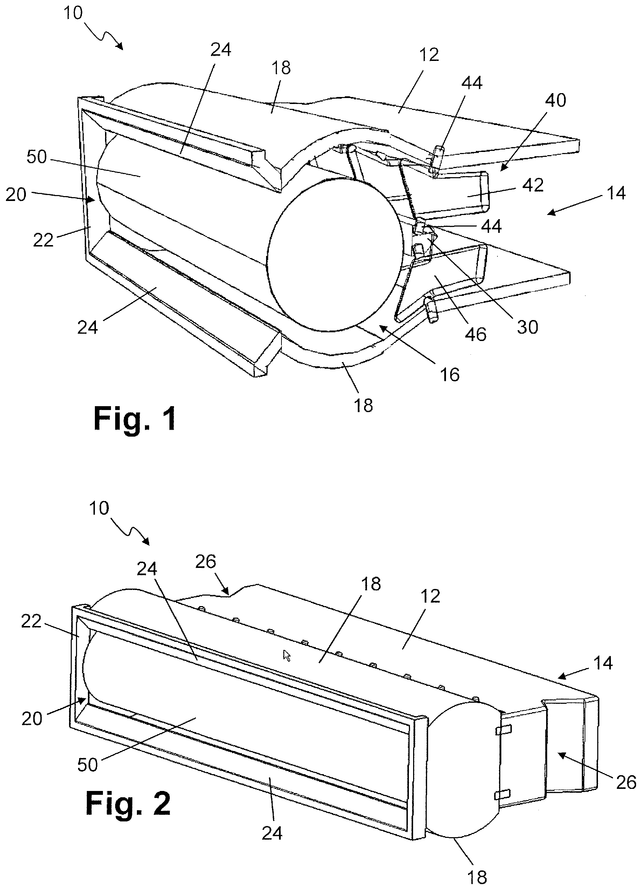

Fig. 1 zeigt eine perspektivische Darstellung eines Luftausströmers 10 einer ersten Ausführungsform in einer geschnittenen Ansicht. Der Luftausströmer 10 kann beispielsweise in einem Armaturenbrett eines Fahrzeugs eingebaut sein. Über den Luftausströmer 10 wird Luft in einen Fahrgastraum eines Fahrzeugs eingebracht, wobei die Richtung der ausströmenden Luft veränderbar ist. Zusätzlich kann auch die Menge der ausströmenden Luft veränderbar sein. Der Luftausströmer 10 der ersten Ausführungsform ist als Fugenausströmer ausgebildet. Der Luftausströmer 10 weist daher eine deutlich größere Breite im Vergleich zu seiner Höhe auf.

Der Luftausströmer 10 weist ein Gehäuse 12 mit einem Lufteintrittsabschnitt 14 und einer Luftaustrittsöffnung 20 auf. Über den Lufteintrittsabschnitt 14 ist das Gehäuse 12 an einen Kanal angeschlossen, über den klimatisierte und temperierte Luft von einer Lüftungseinrichtung zugeführt wird. Über die Luftaustrittsöffnung 20 strömt die Luft aus dem Luftausströmer 10 aus.

Zur Luftablenkung weist der Luftausströmer 10 einen Luftleitkörper 50 und eine Lamellenanordnung 40 mit einer Vielzahl von Paaren gegenüberliegender Lamellen 42 und 46 auf.

Die Lamellen 42 und 46 dienen zur seitlichen Luftablenkung. Hierzu sind die Lamellen 42 und 46 über Lagerzapfen 44 in Lageröffnungen gegenüberliegender Gehäusewände des Gehäuses 12 und in Öffnungen 36 eines Haltestegs 30 verschwenkbar gelagert. Die Lamellen 42 und die Lamellen 46 können jeweils über eine separate Koppeleinrichtung oder eine gemeinsame Koppeleinrichtung miteinander gekoppelt sein, sodass die Lamellen 42 und/oder die Lamellen 46 gemeinsam verschwenkt werden. In einer weiteren Ausführungsform können die Lamellen 42 unabhängig von den Lamellen 46 verschwenkt werden, wodurch sich verschiedene Belüftungseinstellungen realisieren lassen. Koppeleinrichtungen können beispielsweise durch Koppelstangen gebildet werden, die mit den Lamellen über abseits der Schwenkachse, die durch die Lagerzapfen 44 verläuft, verbunden sind. Die Lamellen können dann über ein Bedienelement, dass mit einer Koppeleinrichtung oder mit einer der Lamellen 42 und/oder 46 in Verbindung steht verschwenkt werden. Alternativ kann ein Verschwenken auch durch eine Einrichtung bereitgestellt werden, die ein elektrisch oder elektronisch gesteuertes Verstellen ermöglicht.

Der Haltesteg 30 verläuft parallel zu dem walzenförmig ausgebildeten Luftleitkörper 50. Der Haltesteg 30 weist an seiner Rückseite zudem einen keilförmigen Abschnitt 38 auf, der dazu dient, die Luft in einen oberen Luftweg zu den Lamellen 42 und zu einem unteren Luftweg zu den Lamellen 46 zu leiten.

Der Luftausströmer 10 weist im Bereich des Luftkanals 16, in dem der walzenförmige Luftleitkörper 50 angeordnet ist, gekrümmt ausgebildete Seitenwände 18 auf. Die Seitenwände 18 sind entsprechend der Krümmung des kreisförmigen Querschnitts des Luftleitkörpers 50 ausgebildet. An die Seitenwände 18 schließt sich eine umlaufende Blende 22 an, die die Luftaustrittsöffnung 20 umgibt. Die Blende 22 weist an den parallel zu dem walzenförmigen Luftleitkörper 50 sich erstreckenden Seiten jeweils eine Fase 24 auf. Die Fase 24 dient zusätzlich zur Luftablenkung, wobei ausströmende Luft entlang der Fasen 24 ausströmen kann.

Die Blende 22 kann entweder an dem Gehäuse 12 angeordnet oder als Teil des Gehäuses 12 zumindest mit Teilen des Gehäuses 12 einstückig hergestellt sein. Die Blende 22 kann beispielsweise mit dem Gehäuse 12 verklebt, verschraubt oder verrastet sein.

Fig. 2 zeigt eine perspektivische Darstellung des Luftausströmers 10 der ersten Ausführungsform. Das Gehäuse 12 weist zusätzlich an gegenüberliegenden Seitenwänden des Gehäuses 12 Verengungen 26 auf. An diesen Verengungen 26 kommen die Lamellen 42 und 46, welche sich direkt neben den Verengungen 26 befinden, in ihrer maximal verschwenkten Stellung in Anlage. In einer nicht verschwenkten Stellung der Lamellen 42 und 46 verengen diese Verengungen 26 den Luftkanal und bewirken eine Beschleunigung und Bündelung der durchströmenden Luft. Die Verengungen 26 unterstützen damit die Luftausströmung, insbesondere in einer Spotstellung.

Über die Luftaustrittsöffnung 20 ist lediglich der Luftleitkörper 50 sichtbar und zugänglich. Hierdurch wird verhindert, dass die hinter dem Luftleitkörper 50 gelagerten Elemente beschädigt werden können. Zudem wird eine Verletzung von Personen verhindert, da der Spalt zwischen dem Luftleitkörper 50 und den korrespondierenden Abschnitten des Gehäuses 12 im Bereich der Luftaustrittsöffnung 20 sehr gering ist. Damit ist es beispielsweise nicht möglich, Finger einer Hand dazwischen einzuklemmen.

Darüber hinaus bietet ein solcher Luftausströmer 10 ein optisch ansprechendes Erscheinungsbild. Es sind keine beweglichen Komponenten, mit Ausnahme des Luftleitkörpers 50 sichtbar. Zum Verändern der Richtung der ausströmenden Luft wird der Luftleitkörper 50 jedoch nur bogenförmig nach oben und unten verschwenkt, sodass kaum eine Bewegung des Luftleitkörpers 50 wahrnehmbar ist.

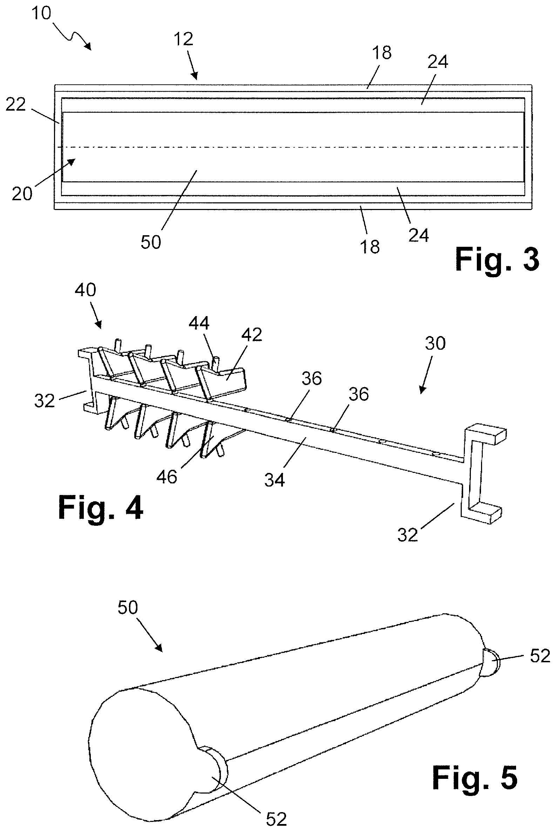

Fig. 3 zeigt eine Frontansicht des Luftausströmers 10 der ersten Ausführungsform. Die Darstellung von Fig. 3 zeigt den Luftausströmer 10 in einer Neutralstellung mit einem nicht verschwenkten Luftleitkörper 50. Ausströmende Luft wird daher im Wesentlichen ohne Luftablenkung nach oben oder unten geradlinig ausgegeben.

Die Darstellung zeigt, dass im Wesentlichen keine beweglichen Komponenten sichtbar sind. Zudem wird eine homogene Oberfläche durch die Oberfläche des walzenförmigen Luftleitkörpers 50 bereitgestellt. Selbst in verschwenkten Stellungen des Luftleitkörpers 50 verändert sich die sichtbare Oberfläche kaum. Die Oberfläche des walzenförmigen Luftleitkörpers 50 kann zumindest abschnittsweise eine Beschichtung oder Ausbildung mit einer Struktur aufweisen. Beispielsweise kann die Oberfläche des walzenförmigen Luftleitkörpers 50 eine dekorative Beschichtung oder Oberflächenausgestaltung aufweisen, sodass sich der Luftausströmer 10 nahtlos in ein Armaturenbrett mit einer entsprechenden Dekorschicht einfügt. Hierzu kann auch die Blende 22 eine entsprechende Beschichtung bzw. die Dekorschicht aufweisen.

Fig. 4 zeigt eine perspektivische Darstellung eines Haltestegs 30 mit Teilen einer Lamellenanordnung 40 des Luftausströmers 10 der ersten Ausführungsform.

Der Haltesteg 30 weist einen Steg 34 und sich daran anschließende Bügel 32 auf. Über die Bügel 32 wird der Haltesteg 30 im Gehäuse 12 des Luftausströmers gelagert. Die Bügel 32 umgreifen abstehende Elemente 52 des Luftleitkörpers 50 (siehe Fig. 5). Über die Bügel 32 wird sichergestellt, dass der Haltesteg 30 sich direkt an den walzenförmigen Luftleitkörper 50 in Strömungsrichtung vorgeschaltet anordnen lässt.

An dem Steg 34 befindet sich eine Vielzahl von Öffnungen 36. In diesen Öffnungen 36 sind die Lagerzapfen 44 der Lamellen 42 und der Lamellen 46 aufgenommen. Die Lamellen 42 und 46 der Lamellenanordnung 40 sind gegenüberliegend angeordnet. In weiteren Ausführungsformen können die Lamellen 42 und die Lamellen 46 auch versetzt zueinander an entsprechenden Lagerstellen des Stegs 34 angeordnet sein.

Fig. 5 zeigt eine perspektivische Darstellung des Luftleitkörpers 50 des Luftausströmers 10 der ersten Ausführungsform.

Der Luftleitkörper 50 ist walzenförmig ausgebildet und weist einen kreisförmigen Querschnitt auf. Gegenüber bekannten ähnlich ausgebildeten Luftleitelementen wird durch den kreisförmigen Querschnitt eine geringere Längserstreckung des Luftleitkörpers 50 bereitgestellt. Hierdurch wird der benötigte Bauraum erheblich reduziert und es wird zudem eine größere Luftablenkung erreicht. Die an den Luftleitkörper 50 entlang strömende Luft folgt der Krümmung der Oberfläche, wobei durch den kreisförmigen Querschnitt eine stärkere Ablenkung erfolgt als bei ovalen Querschnitten.

Der Luftleitkörper 50 weist an seinen gegenüberliegenden Endabschnitten im hinteren Abschnitt abstehende Elemente 52 auf. Über die abstehenden Elemente 52 ist der Luftleitkörper 50 verschwenkbar an den gegenüberliegenden Gehäusewänden des Gehäuses 12 gelagert. Hierzu können die abstehenden Elemente 52 zusätzliche Lagerzapfen oder Öffnungen aufweisen, in welche Lagerzapfen an den Gehäusewänden eingreifen.

Damit der Luftleitkörper 50 in sämtlichen Stellungen seine Position beibehält, können im Bereich der Lagerstellen der abstehenden Elemente 52 Dämpfungs- oder Reibeinrichtungen vorgesehen sein, die ein Moment auf die abstehenden Elemente 52 ausüben. Hierüber wird sichergestellt, dass der Luftleitkörper 50 seine Position im verschwenkten Zustand beibehält. Der Luftleitkörper 50 wird nicht durch seinen Hauptkörper, d. h. im Bereich mit dem kreisförmigen Querschnitt, verschwenkt, sondern über die abstehenden Elemente 52, die eine Schwenkachse definieren, welche beabstandet und parallel zur Mittenachse durch den Hauptkörper verläuft.

Der Luftleitkörper 50 besteht aus einem Kunststoff und kann beispielsweise manuell oder elektronisch bzw. elektrisch angesteuert verschwenkt werden. Bei einem manuellen Verschwenken können an der sichtbaren vorderen Oberfläche des Luftleitkörpers 50 Vertiefungen (wie beispielsweise für den Luftausströmer 10 der zweiten Ausführungsform) oder Strukturen vorgesehen sein. In weiteren Ausführungsformen können auch Bedienelemente angebracht sein. In weiteren Ausführungsformen kann der Luftleitkörper 50 auch einen entsprechend ausgebildeten Abschnitt aufweisen.

Bei elektronisch oder elektrisch angesteuerten Luftleitkörpern 50 sind die abstehenden Elemente 52 mit einer Einrichtung, wie beispielsweise einem Aktuator oder einem Motor, gekoppelt, welche ein Verschwenken bewirken. Zur Übertragung der Verschwenkbewegung kann zudem ein Getriebe vorgesehen sein.

Der Luftleitkörper 50 kann hohl ausgebildet sein. Dies weist den Vorteil auf, dass das Gewicht des Luftleitkörpers 50 reduziert ist. Zudem können in einen hohlen Luftleitkörper Beleuchtungselemente eingebracht sein oder eingeleitet werden, die eine Beleuchtung des Luftleitkörpers über transparente Bereich dessen ermöglichen. Die Einbringung von Licht kann beispielsweise über Lichtleiter erfolgen, die rückseitig, beispielsweise über die abstehenden Elemente 52 mit Leuchtmitteln, wie beispielsweise Leuchtdioden, gekoppelt sind.

Damit der Luftleitkörper 50 eine entsprechende Steifigkeit aufweist, können im Inneren eines im Wesentlichen hohl ausgebildeten Luftleitkörpers 50 versteifende Strukturen oder Streben bzw. Zwischenwände angeordnet sein.

In noch weiteren Ausführungsformen kann der Luftleitkörper 50 auch massiv ausgebildet sein. Als Material für den Luftleitkörper 50 können verschiedene Stoffe verwendet werden. Beispielsweise können auch Metalle oder ein Holz hierfür verwendet werden.

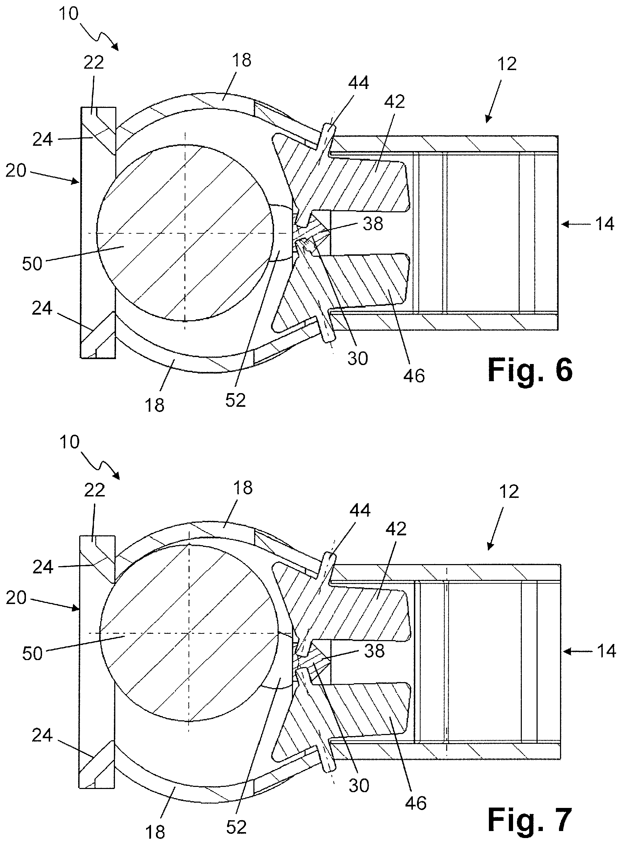

Fig. 6 zeigt eine schematische Schnittansicht des Luftausströmers 10 der ersten Ausführungsform in einer Neutralstellung. In dieser Stellung wird Luft über den Lufteintrittsabschnitt 14 zugeführt. Die zugeführte Luft strömt in den Luftkanal 16 und wird über den keilförmigen Abschnitt 38 zu einem oberen Luftweg im Bereich der Lamellen 42 und einem unteren Luftweg im Bereich der Lamellen 46 aufgeteilt. Die Lamellen 42 und 46 ragen insbesondere in den hinteren Abschnitt des Luftkanals 16, sodass ein Verschwenken des Luftleitkörpers 50 nicht behindert wird.

In der Neutralstellung strömt die Luft entlang der Oberfläche des Luftleitkörpers 50 und den gegenüberliegenden Seitenwänden 18 zu gleichen Teilen. Die austretende Luft über die beiden Luftwege trifft dann aufeinander und stellt einen im Wesentlichen geradlinigen austretenden Luftstrom bereit. In der Neutralstellung wird die Luft daher nicht abgelenkt.

Durch die Anordnung des Luftleitkörpers 50 in dem Luftkanal 16 erfolgt eine zusätzliche Verengung des Strömungsquerschnitts in dem oberen Luftweg und dem unteren Luftweg, was zu einer Beschleunigung des austretenden Luftstroms führt. Eine solche Beschleunigung unterstützt die Luftablenkung.

Fig. 7 zeigt eine schematische Schnittansicht des Luftausströmers 10 der ersten Ausführungsform mit einem nach oben verschwenkten Luftleitkörper 50. In dieser Ausführungsform wird ausgegebene Luft nach oben abgelenkt. Die einströmende Luft kann nur über den unteren Luftweg im Bereich der Lamellen 46 austreten, da der obere Luftweg durch den verschwenkten Luftleitkörper 50 versperrt ist. Der Querschnitt des unteren Luftwegs wird über den Luftleitkörper 50 zudem zusätzlich verkleinert, was zu einer Beschleunigung des Luftstroms führt. Durch die Krümmung des Luftleitkörpers 50 und der Seitenwände 18 erfolgt eine Luftablenkung nach oben, wobei die ausströmende Luft der Krümmung der Seitenwand 18 folgt.

Der Luftausströmer 10 bietet den Vorteil einer intuitiven Steuerung, wobei ein Verschwenken des Luftleitkörpers 50 nach oben auch eine Luftablenkung nach oben bewirkt. Auch in der maximal verschwenkten Stellung des Luftleitkörpers 50 ist der Abstand zwischen der Oberfläche des Luftleitkörpers 50 und der gegenüberliegenden Seitenwand 18 so gering, dass die in Luftströmungsrichtung vorgelagerten Lamellen 46 nicht sichtbar sind und keine Gegenstände oder Körperteile in den gebildeten Spalt eingebracht werden können.

Wesentlicher Vorteil des Luftausströmers 10 gegenüber bekannten Luftausströmern ist, dass der Luftausströmer 10 der hierin beschriebenen Ausführungen nur einen geringen Bauraum benötigt, da durch den kreisförmigen Querschnitt des Luftleitkörpers 50 bei einer geringeren Größe des Luftleitkörpers 50 eine stärkere Luftablenkung erreicht wird. Hierdurch werden zudem das Gewicht und die Kosten für einen solchen Luftausströmer 10 reduziert.

### Zweite Ausführungsform

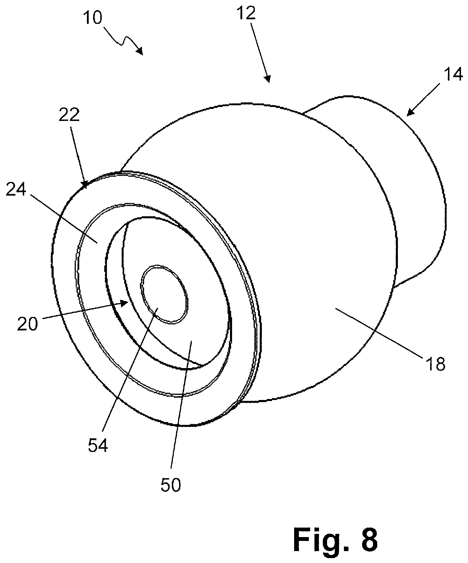

Fig. 8 zeigt eine perspektivische Darstellung eines Luftausströmers 10 einer zweiten Ausführungsform. Der Luftausströmer 10 der zweiten Ausführungsform ist als sogenannter Kugellüfter ausgebildet. Dementsprechend weist der Luftausströmer 10 ein Gehäuse 12 mit einer im Wesentlichen kugelförmigen Seitenwand 18 und eine runde Blende 22 mit einer im Wesentlichen runden Luftaustrittsöffnung 20 auf. Die Luftaustrittsöffnung 20 ist dabei von einer im Wesentlichen runden Fase 24 umgeben. Die Funktion der Fase 24 entspricht der Funktion für den Luftausströmer 10 der ersten Ausführungsform.

Das Gehäuse 12 weist zudem einen Lufteintrittsabschnitt 14 auf, über den temperierte und klimatisierte Luft über einen weiteren Luftkanal von einer Fahrzeugklimaanlage zugeführt wird.

In dem Luftkanal 16 des Luftausströmers 10 ist ein kugelförmiger Luftleitkörper 50 aufgenommen. Der kugelförmige Luftleitkörper 50 der hierin beschriebenen Ausführungsform weist an seiner vorderen Seite eine Vertiefung 54 auf. Die Vertiefung 54 dient zum einen für ein manuelles Verschwenken durch einen Benutzer und andererseits zur Darstellung der Richtung der ausgegebenen Luft.

Wie bereits für die erste Ausführungsform beschrieben, kann der Luftleitkörper 50 auch eine Beschichtung oder eine Dekorschicht aufweisen.

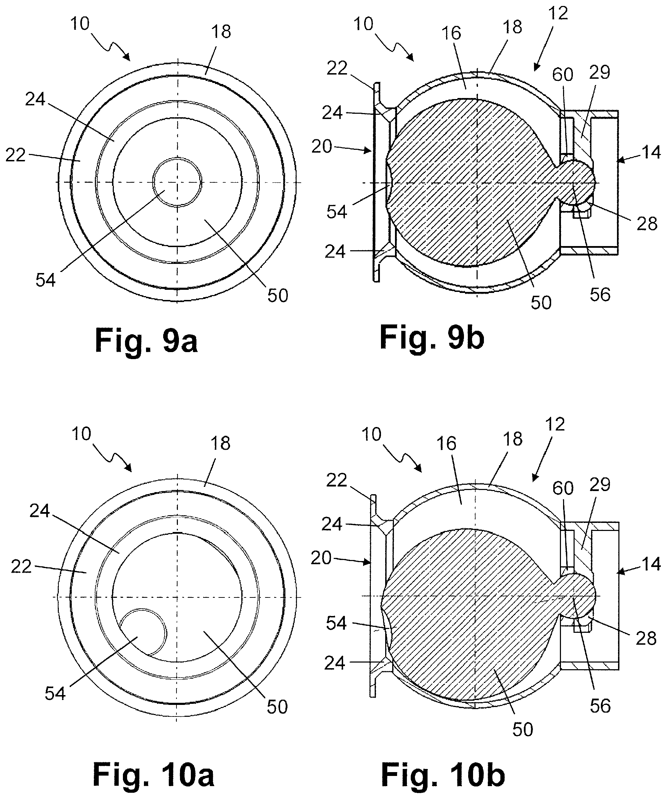

Die Fig. 9a und b zeigen verschiedene Ansichten des Luftausströmers 10 der zweiten Ausführungsform in einer Neutralstellung. Der Luftleitkörper 50 ist kugelförmig ausgebildet und kann anders als der Luftleitkörper 50 der ersten Ausführungsform in sämtliche Richtungen verschwenkt werden. Hierzu weist der kugelförmig ausgebildete Luftleitkörper 50 einen kugelförmigen Abschnitt 56 auf, der sich an der Rückseite des Luftleitkörpers 50 befindet. Der kugelförmige Abschnitt 56 ist in einem Lager 28 mit einer Aufnahme für den kugelförmigen Abschnitt 56 aufgenommen. Über einen Ring 60 wird der kugelförmige Abschnitt 56 und damit der Luftleitkörper 50 gehalten. Das Lager 28 ist über einen Steg 29 mit dem Gehäuse 12 des Luftausströmers 10 verbunden. Der kugelförmige Abschnitt 56 kann in der Aufnahme des Lagers 28 verschwenkt werden, um den Luftleitkörper 50 zu verschwenken. Damit der Luftleitkörper 50 seine verschwenkte Stellung beibehält, können in der Lagerstelle Dämpfungs- bzw. Reibelemente vorgesehen sein, die ein bestimmtes Moment erfordern, um ein Verschwenken zu erreichen.

Der Luftleitkörper 50 kann analog zu der ersten Ausführungsform hohl ausgebildet sein und innenliegende Beleuchtungselemente oder Mittel für eine Beleuchtung aufweisen. Alternativ kann der Luftleitkörper 50 auch massiv ausgebildet sein. Zudem ist bei einer hohlen Ausführung auch vorgesehen, dass in weiteren Ausführungsformen versteifende Strukturen eingebracht sind.

In einer Neutralstellung, wie in Fig. 9b gezeigt, gelangt über den Lufteintrittsabschnitt 14 einströmende Luft in den Luftkanal 16 und wird in die Bereiche zwischen der Oberfläche des Luftleitkörpers 50 und der gegenüberliegenden Seitenwand 18 eingebracht. Da der Luftleitkörper 50 zu der ihn umgebenden Seitenwand 18 gleichmäßig beabstandet ist, strömt die Luft gleichmäßig über die Luftaustrittsöffnung 20 heraus. Die ausströmende Luft trifft aufeinander zu, was zu einem im Wesentlichen geradlinigen Ausströmen (Spotstellung) des Luftstrahls führt. Die Querschnitte der Luftwege nehmen ausgehend von einem hinteren Abschnitt des Luftkanals 16 zu der Luftaustrittsöffnung 20 hin ab, sodass eine Beschleunigung der ausströmenden Luft erreicht wird, was die Luftablenkung unterstützt.

Die Fig. 10a und 10b zeigen verschiedene Ansichten des Luftausströmers 10 der zweiten Ausführungsform mit einem nach unten verschwenkten Luftleitkörper 50. Fig. 10a zeigt den zusätzlich zur Seite verschwenkten Zustand, wobei die Stellung des Luftleitkörpers 50 und damit die Richtung der ausgegebenen Luft über die Vertiefung 54 sichtbar sind. Die Vertiefung 54 dient nicht nur zur Darstellung der Richtung der ausgegebenen Luft sondern auch für einen Benutzer zum Verschwenken des Luftleitkörpers 50.

Fig. 10b zeigt, dass der Luftweg in dem Bereich, in welchem der Luftleitkörper 50 in Anlage mit der Seitenwand 18 kommt, versperrt ist. Dementsprechend gelangt in dem gegenüberliegenden Abschnitt des Luftkanals mehr Luft und eine Luftablenkung wird entsprechend aufgrund der Krümmung des Luftleitkörpers 50 und der Seitenwand 18 nach unten bereitgestellt.

Der Luftausströmer 10 der zweiten Ausführungsform ermöglicht eine Luftablenkung in sämtlichen Bereichen ohne zusätzliche Ablenkmittel. Zudem ist der Luftausströmer 10 gegenüber bekannten Ausführungen dahingehend verbessert, dass nur ein geringer Bauraum erforderlich ist. Durch die kugelförmige Ausgestaltung des Luftleitkörpers 50 mit einem kreisförmigen Querschnitt wird bei einer geringen Abmessung des Luftleitkörpers 50 eine maximale Luftablenkung bereitgestellt. Dieser Vorteil führt zu der einfachen Ausführung des Luftausströmers 10.

Bei den vorstehend beschriebenen Luftausströmern 10 der ersten und der zweiten Ausführungsform kann zusätzlich eine in Luftströmungsrichtung vorgelagerte Schließeinrichtung vorgesehen sein, welche die Menge der zugeführten Luft steuert. Eine solche Schließeinrichtung kann über ein Bedienelement manuell oder elektronisch bzw. elektrisch angesteuert verschwenkt bzw. verstellt werden.

### Bezugszeichenliste

- 10: Luftausströmer
- 12: Gehäuse
- 14: Lufteintrittsabschnitt
- 16: Luftkanal
- 18: Seitenwand
- 20: Luftaustrittsöffnung
- 22: Blende
- 24: Fase
- 26: Verengung
- 28: Lager
- 29: Steg
- 30: Haltesteg
- 32: Bügel
- 34: Steg
- 36: Öffnung
- 38: Abschnitt
- 40: Lamellenanordnung
- 42: Lamelle
- 44: Lagerzapfen
- 46: Lamelle
- 50: Luftleitkörper
- 52: Element
- 54: Vertiefung
- 56: Abschnitt
- 60: Ring

## Patentansprüche

1. Luftausströmer, aufweisend einen Luftkanal (16), in dem ein Luftleitkörper (50) verschwenkbar gelagert ist, wobei
- der Luftleitkörper (50) einen rückseitigen Abschnitt aufweist, der einer Luftaustrittsöffnung (20) des Luftkanals (16) abgewandt ist,
- der Luftleitkörper (50) über den rückseitigen Abschnitt verschwenkbar im Luftkanal (16) gelagert ist,
- der Luftleitkörper (50) einen kreisförmigen Querschnitt aufweist, und
- der Luftkanal (16) einen dem Luftleitkörper (50) angepassten Querschnitt aufweist.

2. Luftausströmer nach Anspruch 1, wobei der Luftleitkörper (50) kugelförmig ausgebildet ist.

3. Luftausströmer nach Anspruch 1, wobei der Luftleitkörper (50) walzenförmig ausgebildet ist.

4. Luftausströmer nach Anspruch 3, wobei im Luftkanal (16) eine Lamellenanordnung (40) angeordnet ist.

5. Luftausströmer nach Anspruch 4, wobei die Lamellenanordnung (40) aus mindestens einem Lamellenpaar besteht und eine erste Lamelle (42) in einem oberen Luftweg und eine zweite Lamelle (46) des Lamellenpaares in einem unteren Luftweg angeordnet sind.

6. Luftausströmer nach Anspruch 5, aufweisend einen Haltesteg (30) mit Lagerstellen für Paare gegenüberliegender Lamellen (42; 46), wobei der Haltesteg (30) parallel zu dem walzenförmigen Luftleitkörper (50) verläuft und dem Luftleitkörper (50) in Luftströmungsrichtung vorgelagert ist.

7. Luftausströmer nach Anspruch 6, wobei der Haltesteg (30) einen keilförmigen Abschnitt (38) aufweist.

8. Luftausströmer nach einem der Ansprüche 1 bis 7, wobei der Luftleitkörper (50) an seiner der Luftaustrittsöffnung (20) zugewandten Seite ein Bedienelement oder eine Vertiefung (54) aufweist.

9. Luftausströmer nach einem der Ansprüche 1 bis 8, wobei der Luftleitkörper (50) mit einer Einrichtung zum Verschwenken des Luftleitkörpers (50) gekoppelt ist.

10. Luftausströmer nach einem der Ansprüche 1 bis 9, wobei der Luftleitkörper (50) hohl ausgebildet ist.
